# EUROPÄISCHE PATENTSCHRIFT

(11) **EP 0 732 532 B1**
(45) Veröffentlichungstag und Bekanntmachung des Hinweises auf die Patenterteilung: **28.02.2001**
(21) Anmeldenummer: 95118104.9
(22) Anmeldetag: 16.11.1995
(51) Int. Cl.: F16L 55/128

(54) **Aufblasbares Rohrdichtkissen für Rohrleitungen**
Inflatable pipe sealing pillow for conduits
Coussin gonflable d'étanchéité pour tuyaux

(30) Priorität: 16.03.1995 DE 19509096
(43) Veröffentlichungstag der Anmeldung: 18.09.1996
(73) Patentinhaber: Manfred Vetter GmbH & Comp., 53909 Zülpich (DE)
(72) Erfinder: Vetter, Manfred, D-53909 Zülpich (DE)
(74) Vertreter: Bauer, Wulf, Dr.

(56) Entgegenhaltungen:
- US-A- 1 760 750
- US-A- 2 678 666
- US-A- 4 079 755
- US-A- 4 883 094
- US-A- 5 234 034

## Beschreibung

Die Erfindung bezieht sich auf ein aufblasbares Rohrdichtkissen für Rohrleitungen mit stetig begrenztem Innenprofil, wobei das Rohrdichtkissen aus zwei armierten, stirnseitigen Kappen und einem diese beiden Kappen verbindenden Mantel aufgebaut ist und der Zuschnitt der Kappen im wesentlichen der Form des Innenprofils der abzudichtenden Rohrleitung entspricht.

Bei den vorbekannten Rohrdichtkissen dieser Art (US-Patent 4,883,094), das zylindrisch ausgeführt ist, ist der Mantel einheitlich aufgebaut, die Armierung des Mantels ist als Kreuzgewebe ausgeführt. Theoretisch kann sich der Mantel daher an allen seinen Stellen unterschiedslos ausdehnen. Im Bereich der Kappen ist die Ausdehnung jedoch begrenzt. Demzufolge hat das im Freien aufgeblasene Kissen im wesentlichen die Form eines Fasses, also auf der Längsmitte den größten Durchmesser, von dort aus nimmt der Durchmesser ab zu den Kappen hin. Dies bedeutet aber, daß der Winkel, den die Kappen mit dem Mantel einschließen, sich im Laufe des Aufblasens ändert, er liegt in der Nähe bei 90° und wird mit zunehmendem Aufblasen größer. Für den bei der Herstellung von Rohrdichtkissen besonders kritischen Übergangsbereich zwischen Mantel und Kappen ist dies ungünstig, weil dort bei jedem Füll- und jedem Entleervorgang Bewegungen auftreten. Das Material im Übergangsbereich ermüdet daher vorzeitig, dies ist nachteilig.

Hiervon ausgehend liegt der Erfindung die Aufgabe zugrunde, das Rohrdichtkissen der eingangs genannten Art so weiterzubilden, daß der Übergang zwischen den beim Aufblasen ausbeulenden Bereichen und den beim Aufblasen im wesentlichen ihre Abmessungen beibehaltenden Bereichen des Rohrdichtkissens nicht mehr in Nähe der Verbindung von Kappen und Mantel erfolgt, so daß dieser abgewinkelte Übergangsbereich nicht mehr beim Aufblasen stark arbeitet und damit belastet wird.

Ausgehend von dem Rohrdichtkissen der eingangs genannten Art wird diese Aufgabe dadurch gelöst, daß der Mantel drei unterschiedliche Teilbereiche aufweist, die in Axialrichtung nebeneinander angeordnet sind, nämlich zwei stirnseitige Endbereiche des Mantels, die sich über jeweils mindestens 10 %, vorzugsweise mindestens 20 % der Gesamtlänge erstrecken und mit den Kappen verbunden sind und einem dazwischen befindlichen Mittelbereich, daß dieser Mittelbereich stärker dehnbar ausgebildet ist als die Endbereiche, so daß bei einem Aufblasen des Rohrdichtkissens im Freien sich der Mittelbereich deutlich stärker ausdehnt als die Endbereiche, und daß die Endbereiche eine Armierung mit in zwei unterschiedlichen Richtungen verlaufenden, sich kreuzenden Armierungsfäden haben.

Erfindungsgemäß werden also die unmittelbar an die Kappen anschließenden Endbereiche des Mantels so stark armiert, daß sie sich beim Aufblasen des Kissens nur geringfügig ausdehnen können, jedenfalls deutlich geringer als der Mittelbereich des Mantels, wo die eigentliche Ausdehnung und damit auch die Abdichtung gegen eine Rohrinnenwand stattfindet. Demgemäß findet also der Übergang zwischen den sich beim Aufblasen stärker expandierenden Teilbereichen des Rohrdichtkissens und den im wesentlichen formbestimmenden, sich relativ gering ausdehnenden Teilbereichen im Abstand von den Kappen und entlang des Mantels selbst statt.

Der Mantel ist nicht mehr, wie früher, durchgehend gleichmäßig armiert, vielmehr ist er in drei unterschiedliche Teilbereiche aufgeteilt. Die endseitigen Teilbereiche sind so armiert, daß sie sich beim Aufblasen nur geringfügig ausdehnen können. Damit wird der Übergang von diesen Teilbereichen in die Kappen beim Ausdehnen praktisch nicht belastet, die kritische Zone, wie sie oben beschrieben wurde, und die im Bereich der Knickstellen lag, ist nun an einen anderen Ort verlegt. Das erfindungsgemäße Rohrdichtkissen beult sich beim Aufblasen daher auch nicht mehr im wesentlichen tonnenförmig aus, vielmehr findet eine merkliche Ausdehnung nur im Mittelbereich und innerhalb dieses Mittelbereichs auch nur dort statt, wo eine ausreichende Entfernung von den Endbereichen vorliegt. Diejenigen Teilflächen des Mittelbereichs, die unmittelbar an die stirnseitigen Endbereiche angrenzen, werden durch letztere in ihrer Ausdehnung limitiert, je weiter weg man von den Endbereichen zur Mitte des Mittelbereichs fortschreitet, um so geringer wird der Einfluß der stark armierten Endbereiche und um so stärker kann sich das Material ausdehnen. Insoweit läßt sich das aufgeblasene Rohrdichtkissen nach der Erfindung beschreiben als ein Zylinder, der in der Mitte einen Wulst hat. Die Größe dieses Wulstes läßt sich durch die Länge des Mittelbereichs und seiner Armierung beeinflussen.

Wenn die axiale Länge der Mittelbereiche zumindest 10 % der Gesamtlänge des Mantels beträgt, bleiben beim Aufblasen mechanische Auswirkungen auf den Winkelübergang zwischen Mantel und Kappe fern. Mit länger ausgebildeten Endbereichen, beispielsweise 20 % der Gesamtlänge, werden die Übergangsbereiche zunehmend weiter entlastet.

Besonders günstig ist das aufblasbare Rohrdichtkissen bei nicht runden, abzusperrenden Rohrleitungen. In diesem Fall sind die Kappen nicht rund, vielmehr entsprechend der Form der abzusperrenden Rohrleitung eiförmig, oval, ellyptisch oder dergleichen. Die Kappen haben im wesentlichen die gleichen Abmessungen wie der Innenquerschnitt der abzusperrenden Rohrleitung. Würde ein derartiges Rohrdichtkissen nach dem Stand der Technik ausgebildet, so wäre eine vollständige Abdichtung bzw. ein allseitig gleicher Anpressdruck des Kissens an die Innenwand der Rohrleitung nicht zu erreichen, vielmehr tendiert beim Aufblasen die Mitte des Mantels immer zu einem kreisförmigen Verlauf, was zu starkem Anpressdruck im Bereich geringerer Krümmung an Stellen mit geringen lichten Abmessungen, beispielsweise in Horizontalrichtung bei einer Rohrleitung mit einem ovalen, hochkant angeordneten Querschnitt und weiterhin dazu führt, daß der Mantel sich aus rinnenförmigen Vertiefungen, wie sie beispielsweise die engere Krümmung einer Rohrleitung mit Eiquerschnitt darstellt, herausdrückt, dort also nicht abdichtet. Das erfindungsgemäße Rohrdichtkissen erzwingt aber nun, daß auch der Mittelbereich im wesentlichen die Form der abzudichtenden Rohrleitung beibehält, auch wenn er stark aufgeblasen ist. Die Form wird durch die Stirnwände vorgegeben, sie wird beibehalten durch die Endbereiche, die sich praktisch nicht ausdehnen können und die dem Verlauf der Ränder der Kappen folgen, also beispielsweise eiförmig verlaufen.

Durch den in drei Teilbereiche aufgeteilten Verlauf des Mantels in Längsrichtung (Axialrichtung) wird es möglich, Rohrdichtkissen für unrunde, insbesondere stark unrunde Rohrleitungen zu erstellen und diese allseitig mit ungefähr gleichem Anpressdruck anliegend vollständig abzusperren. Mit Rohrdichtkissen nach dem Stand der Technik ist dies nur sehr schwer, zumeist nicht erreichbar.

Unter einem stetig begrenzten Innenquerschnitt wird ein Innenquerschnitt verstanden, dessen Randlinie aus Bögen und Geraden zusammengesetzt ist, wobei die Übergangsstellen glatt verlaufen, also keine Ecken oder Kanten ausbilden. Mathematisch ausgedrückt ist der Umfang eines derartigen Innenprofils stetig differenzierbar, die erste Ableitung macht somit an keiner Stelle einen Sprung.

In einer bevorzugten Weiterbildung ist der Mantel durch parallel zur Axialrichtung verlaufende Fäden armiert. Die Endbereiche sind zusätzlich hierzu in Umfangsrichtung armiert. Durch die erste Armierung wird die Längenausdehnung des Kissens beim Aufblasen verhindert, die zweite Armierung verhindert eine umfängliche Ausdehnung der Endbereiche.

Weiterhin ist es vorteilhaft, die beiden Endbereiche baugleich auszuführen. Dadurch kommt es zu einem regelmäßigen Ausbeulen des Rohrdichtkissens beim Aufblasen.

Schließlich hat es sich als vorteilhaft erwiesen, daß Armierungsfäden aus dem Bereich der Kappen in den Mantel hineinlaufen, also durch den Knickbereich zwischen Kappe und Mantel hindurchgehen. Auf diese Weise ist dieser kritischer Knickbereich armiert.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:
FIG. 1 eine perspektivische Ansicht eines Rohrdichtkissens mit runden Kappen,
FIG. 2 eine Draufsicht auf einen Zuschnitt für eine Kappe eines Rohrdichtkissens mit Ei-förmigen Querschnitt und
FIG. 3 eine teilweise schnittbildlich ausgeführte Seitenansicht auf ein Rohrdichtkissen nach der Erfindung.

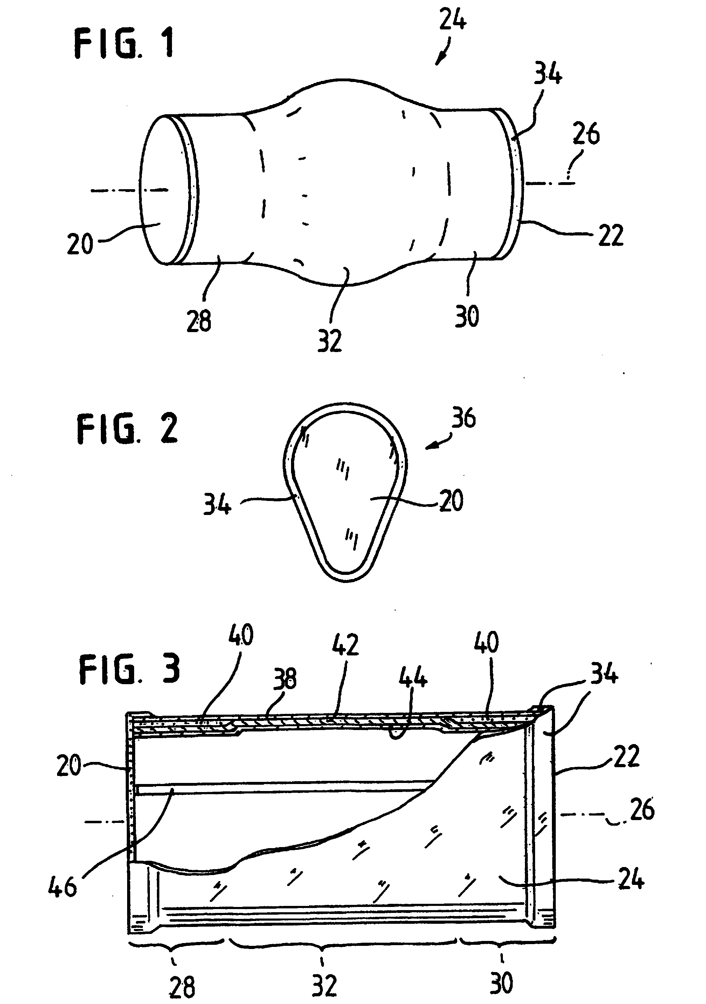

FIG. 1 zeigt ein Rohrdichtkissen nach der Erfindung im aufgeblasenen Zustand, außerhalb einer Rohrleitung. Dieser Zustand zeigt im Gegensatz zu einem in einer Rohrleitung aufgeblasenen Rohrdichtkissen deutlich die unterschiedliche Ausdehnbarkeit der einzelnen Bereiche des Mantels. Hierzu im einzelnen:

Wie FIG. 1 zeigt, hat das Kissen zwei endseitige Kappen 20, 22 die im Ausführungsbeispiel nach FIG. 1 rund sind, und einen diese beiden Kappen 20, 22 verbindenden Mantel 24. Letzterer ist in Axialrichtung 26 gesehen in drei Bereiche aufgeteilt: Angrenzend an jede Kappe 20, 22 befindet sich ein stirnseitiger Endbereich 28 bzw. 30, zwischen diesen beiden Endbereichen 28, 30 liegt ein Mittelbereich 32. Die beiden Endbereiche 28, 30 die mit der jeweils zugehörigen Kappe 20 bzw. 22 verbunden sind, sind deutlich stärker armiert als der Mittelbereich 32. Die Endbereiche 28, 30 sind baugleich, sie erstrecken sich über jeweils 22,5 % der Gesamtlänge. Die restlichen 55 % Gesamtlänge nimmt damit der Mittelbereich 32 ein. Der Mittelbereich 32 ist vorzugsweise in Längsrichtung armiert, er kann aber auch eine Kreuzarmierung haben. Entscheidend ist nur, daß er keine Armierung in Umfangsrichtung hat, denn diese würde das aus FIG. 1 ersichtliche Ausbeulen beein trächtigen. In den Endbereichen 28, 30 ist dagegen eine in Umfangsrichtung verlaufende Armierung vorteilhaft, weil gerade dadurch eine Vergrößerung des Umfangs beim Aufblasen möglichst vermieden wird.

Wie FIG. 1 zeigt, dehnt sich der Mantel nur im Bereich seiner Mitte, also im Mittelbereich 32, merklich aus, die Endbereiche 28, 30 bewirken aufgrund ihrer deutlich stärkeren Armierung, daß das Rohrdichtkissen dort im wesentlichen zylindrische Form beibehält. Dadurch bleibt der Übergangsbereich zwischen den Endbereichen 28, 30 und den zugehörigen Kappen 20, 22 frei von mechanischen Beanspruchungen während eines Aufblasens und Entleerens.

Der aus FIG. 2 ersichtliche Zuschnitt für eine Kappe 20 hat allseitig ein Übermaß von ca. 4 cm. Dieses Übermaß wird in den Verlauf des Mantels 24 geklappt. Der Zuschnitt ist aus einem armierten Material, insbesondere Kevlar-armierten Gummimaterial, beispielsweise einem Kevlar-Gewebe, hergestellt. Das in den Verlauf des Mantels 24 umgeklappte Material des Übermaßes 34 macht sich als endseitiger Ring in Nähe jeder Kappe 20, 22 bemerkbar, aus den Figuren 1 und 3 sind jeweils zwei derartige Ringe ersichtlich. Durch das Übermaß 34 wird sichergestellt, daß Armierungsfäden aus dem Bereich jeder Kappe kontinuierlich in den Bereich des Mantels 24 übergehen. In einer anderen Ausführung könnte auch ein Teil des Mantels mit Übermaß ausgeführt sein, wobei dann ein Umschlagen in die Ebene der Kappen 20, 22 erfolgt. Beim Umschlagen treten zwangsläufig Fältelungen auf, diese verschwinden aber bei der Vulkanisation.

Der Zuschnitt gem. FIG. 2 für eine Kappe 20 ist in Eiform ausgeführt. Für Abwasserrohre wird eine derartige Profilform häufig eingesetzt. Eine derartige, abzusperrende Rohrleitung hat die Form, wie sie durch die innere Linie des Zuschnitts 36 gem. FIG. 2 beschrieben wird. Diese innere Linie begrenzt den Bereich der Kappe 20.

Der Aufbau eines Rohrdichtkissens mit einer Kappe 20 entsprechend dem Zuschnitt 36 gem. FIG. 2 ist aus FIG. 3 ersichtlich und wird im folgenden beschrieben. Auch die in der FIG. 3 rechte Kappe 22 wird ausgehend von einem Zuschnitt 36 entsprechend FIG. 2 hergestellt. Verbunden sind diese beiden Kappen 20, 22 über den Mantel 24, der aus folgenden, übereinander geschichteten Lagen aufgebaut ist. Außen ist eine Gummilage 38, beispielsweise aus 1,5 mm dickem Naturgummi vorgesehen. Unter dieser befindet sich in den beiden Endbereichen 28, 30 jeweils eine Kreuzgewebeverstärkung 40. Durch diese zusätzliche Kreuzgewebeverstärkung unterscheiden sich die Endbereiche 28, 30 vom sonstigen Teil des Mantels, nämlich dem Mittelbereich 32. Die Armierungsfäden der Kreuzgewebeverstärkung 40 laufen einerseits parallel zur Axialrichtung 26, andererseits quer hierzu, also in Umfangsrichtung. Letztere Armierungsfäden verhindern ein Ausbeulen oder Ausdehnen der Endbereiche 28, 30 beim Aufblasen. Unterhalb der Kreuzgewebverstärkung 40 in den Endbereichen 28, 30 und unterhalb der Gummilage 38 im Mittelbereich 32 befindet sich eine Armierungslage 42 aus Nyloncord, die wie die Gummilage 38 sich über die ganze Mantellänge erstreckt. Die Armierungsfäden verlaufen ausschließlich parallel zur Axialrichtung 26. Es ist zwar möglich, als Armierungslage 42 ein Kreuzgewebe zu nehmen, dann aber muß verhindert werden, daß Armierungsfäden parallel zur Axialrichtung 26 verlaufen, beispielsweise könnte eine als Kreuzgewebe ausgeführte Armierungslage 42 so ausgerichtet werden, daß die Armierungsfäden im Winkel von 45° zur Axialrichtung 26 angeordnet sind. Unter der Armierungslage 42 befindet sich wiederum eine, über die gesamte Länge des Mantels 24 durchgehende Gummilage 44 aus demselben Material wie die Gummilage 38. Wie FIG. 3 zeigt, ist der Mantel im Mittelbereich 32 etwas dünner als in den Endbereichen 28, 30.

Mit seinen Endflächen stößt der so hergestellte Mantel 24 gegen die Innenfläche der beiden Kappen 20, 22. Die Außenkontur des Mantels 24, bestimmt durch die Außenfläche der Gummilage 38, folgt dabei der Kontur der inneren, den Bereich der Kappe 20 begrenzenden Linie im Zuschnitt 36 gem. FIG. 2. Gleiches gilt für die rechte Kappe 22. Das Material des Übermaßes 34 ist in den Verlauf des Mantels 24 geklappt, wie aus FIG. 3 ersichtlich ist, wo mit 34 die entsprechenden Bereiche bezeichnet sind. Da der Zuschnitt 36 in Kreuzrichtung armiert ist, die Armierungsfäden sind in FIG. 3 für die linke Kappe 20 durch Punkte dargestellt, gehen die Armierungsfäden durch den 90° Winkel zwischen den Kappen 20, 22 und dem Mantel 24 hindurch, erstrecken sich also von der jeweiligen Kappe 20 bzw. 22 in den Bereich des Mantels 24.

In FIG. 3 ist die Dicke des Mantels 24 übertrieben groß dargestellt, um die einzelnen Schichten besser erkennen zu können. Die tatsächliche Dicke des Mantels liegt im Mittelbereich 32 bei etwa 4-5 mm, in den Endbereichen 28, 30 ist sie ca. 2-3 mm stärker. Nach der Erfindung lassen sich aber grundsätzlich auch Kissen mit Mänteln anderer Dicke, insbesondere wesentlich dickere Mäntel herstellen.

Um ein unerwünschtes Ausbeulen der Kappen 20, 22 nach außen beim Aufblasen des Rohdichtkissens zu vermeiden, ist noch eine Innenbebänderung vorgesehen. In FIG. 3 ist von dieser ein Band 46 aus flexiblem Material gezeigt, es verbindet die beiden Kappen 20, 22 unmittelbar.

Das erfindungsgemäße Rohrdichtkissen kann auch als Ring-Rohrdichtkissen ausgebildet sein.

## Patentansprüche

1. Aufblasbares Rohrdichtkissen für Rohrleitungen mit stetig begrenztem Innenprofil, wobei das Rohrdichtkissen aus zwei armierten, stirnseitigen Kappen (20, 22) und einem diese beiden Kappen (20, 22) verbindenden Mantel (24) aufgebaut ist und der Zuschnitt der Kappen (20, 22) im wesentlichen der Form des Innenprofils der abzudichtenden Rohrleitung entspricht, dadurch gekennzeichnet, daß der Mantel drei unterschiedliche Teilbereiche aufweist, die in Axialrichtung nebeneinander angeordnet sind, nämlich zwei stirnseitige Endbereiche (28, 30) des Mantels (24), die sich über jeweils mindestens 10 %, vorzugsweise mindestens 20 % der Gesamtlänge erstrecken und jeweils mit einer Kappe (20, 22) verbunden sind und einem dazwischen befindlichen Mittelbereich (32), daß dieser Mittelbereich (32) stärker dehnbar ausgebildet ist als die Endbereiche (28, 30), so daß bei einem Aufblasen des Rohrdichtkissens im Freien sich der Mittelbereich (32) deutlich stärker ausdehnt als die Endbereiche (28, 30), und daß die Endbereiche (28, 30) eine Armierung mit in zwei unterschiedlichen Richtungen verlaufenden, sich kreuzenden Armierungsfäden haben.

2. Rohrdichtkissen nach Anspruch 1, dadurch gekennzeichnet, daß der Mittelbereich des Mantels (24) durch parallel zur Axialrichtung (26) verlaufende Fäden armiert ist.

3. Rohrdichtkissen nach Anspruch 1, dadurch gekennzeichnet, daß das Profil der Rohrleitung unrund ist und dementsprechend die Form der Kappen (20, 22) ebenfalls unrund ausgeführt ist.

4. Rohrdichtkissen nach Anspruch 1, dadurch gekennzeichnet, daß die beiden Endbereiche (28, 30) baugleich ausgeführt sind.

5. Rohrdichtkissen nach Anspruch 1, dadurch gekennzeichnet, daß bei der Herstellung der Kappen (20, 22) ein Zuschnitt (36) benutzt wird, der Übermaß (34) aufweist, daß bei der Herstellung die Übermaßbereiche in den Verlauf des Mantels (24) umgebogen werden und daß beim fertiggestellten Rohrkissen die Übermaßbereiche einen Teil des Mantels (24) bilden.

6. Rohrdichtkissen nach Anspruch 1, dadurch gekennzeichnet, daß Armierungsfäden aus einer Kappe (20, 22) in den Mantel (24) hineinlaufen und dort eingebettet sind oder umgekehrt Armierungsfäden aus dem Mantel (24) in die Ebene der Kappen (20, 22) abgebogen und dort eingebettet sind.

7. Rohrdichtkissen nach Anspruch 1, dadurch gekennzeichnet, daß es aus Gummi-Rohmaterial hergestellt und durch Vulkanisieren, vorzugsweise in einem einzigen Schritt, hergestellt ist.

8. Rohrdichtkissen nach Anspruch 1, dadurch gekennzeichnet, daß die axiale Länge jedes der baugleichen stirnseitigen Endbereiche 20 % bis 30 %, vorzugsweise 25 % der Gesamtlänge des Rohrdichtkissens ausmacht.

## Claims

1. An inflatable pipe sealing pad for pipelines with a continuously bordered inner section, whereas the pipe sealing pad is made up of two reinforced end caps (20, 22) and of a casing (24) joining these two caps (20, 22) and whereas the blank of the caps (20, 22) substantially conforms to the shape of the inner section of the pipeline to be sealed, characterized in that the casing is made up of three different sections disposed side by side in axial direction, namely two frontal end areas of the casing extending each over at least 10%, preferably over at least 20% of the overall length and being each connected with one cap (20, 22), and one central area (32) located therein between, that this central area (32) is more expandable than the end areas (28, 30) so that, when the pipe sealing pad is inflated in open air, the central area (32) expands considerably more than the end areas (28, 30) and that the end areas (28, 30) are provided with a reinforcement with reinforcing fibres oriented in two different directions and arranged crosswise.

2. Pipe sealing pad according to claim 1, characterized in that the central area of the casing (24) is reinforced by fibres that are arranged parallel to the axial direction (26).

3. Pipe sealing pad according to claim 1, characterized in that the profile of the pipeline is non circular and that, accordingly, the shape of the caps (20, 22) is non circular as well.

4. Pipe sealing pad according to claim 1, characterized in that the two end areas (28, 30) are built according to the same design principle.

5. Pipe sealing pad according to claim 1, characterized in that a blank (36) is used to manufacture the caps (20, 22), said blank being oversized (34) in dimension, that the oversize areas are folded into the course of the casing (24) on manufacturing and that the oversize areas constitute part of the casing (24) once the pipe pad has been completed.

6. Pipe sealing pad according to claim 1, characterized in that the reinforcing fibres extend from a cap (20, 22) into the casing (24) where they are embedded or, conversely, that reinforcing fibres are bent from the casing (24) into the plane of the caps (20, 22) where they are embedded.

7. Pipe sealing pad according to claim 1, characterized in that the raw material it is made of is rubber and that it is manufactured by vulcanization, preferably in one single step.

8. Pipe sealing pad according to claim 1, characterized in that the axial length of each of the frontal end areas, which are built according to the same design principle, amounts to 20% to 30%, preferably to 25% of the overall length of the pipe sealing pad.

## Revendications

1. Coussin d'étanchéité gonflable de tuyau pour des tuyauteries avec un profil intérieur continûment limité, le coussin d'étanchéité de tuyau étant constitué de deux chapeaux frontaux armés (20, 22) et d'une enveloppe (24) reliant ces deux chapeaux (20, 22), et la coupe des chapeaux (20, 22) correspondant pour l'essentiel à la forme du profil intérieur de la tuyauterie à étancher, caractérisé par le fait que l'enveloppe présente trois sections différentes qui sont disposées l'une à côté de l'autre dans la direction axiale, à savoir deux zones terminales frontales (28, 30) de l'enveloppe (24), qui s'étendent sur respectivement 10% du moins, de préférence sur 20% du moins de la longueur totale et qui sont reliées respectivement à un chapeau (20, 22), ainsi qu'une zone centrale (32) se trouvant entre elles, que cette zone centrale (32) est plus expansible que les zones terminales (28, 30), de sorte que, lorsque le coussin d'étanchéité de tuyau est gonflé en plein air, ladite zone centrale (32) se dilate beaucoup plus fortement que les zones terminales (28, 30), et que les zones terminales (28, 30) présentent une armature avec des fils d'armature qui se croisent et s'étendent dans deux directions différentes.

2. Coussin d'étanchéité de tuyau selon la revendication 1, caractérisé par le fait que la zone centrale de l'enveloppe (24) est armée par des fils s'étendant parallèlement à la direction axiale (26).

3. Coussin d'étanchéité de tuyau selon la revendication 1, caractérisé par le fait que le profil de la tuyauterie est non rond et que, par conséquent, la forme des chapeaux (20, 22) est elle aussi non ronde.

4. Coussin d'étanchéité de tuyau selon la revendication 1, caractérisé par le fait que les deux zones terminales (28, 30) présente une construction identique.

5. Coussin d'étanchéité de tuyau selon la revendication 1, caractérisé par le fait que, lors de la fabrication des chapeaux (20, 22), on utilise une coupe (36) qui présente une surmesure (34), que, lors de la fabrication, les zones de surmesure sont pliées dans la direction de l'enveloppe (24) et que, une fois que le coussin d'étanchéité de tuyau est fini, les zones de surmesure forment une partie de l'enveloppe (24).

6. Coussin d'étanchéité de tuyau selon la revendication 1, caractérisé par le fait que des fils d'armature s'étendent d'un chapeau (20, 22) dans l'enveloppe (24) où ils sont enrobés, ou que, inversement, des fils d'armature sont pliés de l'enveloppe (24) dans le plan des chapeaux (20, 22) où ils sont enrobés.

7. Coussin d'étanchéité de tuyau selon la revendication 1, caractérisé par le fait qu'il est fabriqué de matière brute de caoutchouc et qu'il est fabriqué par vulcanisation, de préférence en une seule étape.

8. Coussin d'étanchéité de tuyau selon la revendication 1, caractérisé par le fait que la longueur axiale de chacune des zones terminales frontales de construction identique fait entre 20% et 30%, de préférence 25% de la longueur totale du coussin d'étanchéité de tuyau.
